Europäisches Patentamt

European Patent Office

Office européen des brevets

(19)

(11) Veröffentlichungsnummer: **0 230 257**
**A2**

(12) **EUROPÄISCHE PATENTANMELDUNG**

(21) Anmeldenummer: 87100381.0

(22) Anmeldetag: 14.01.87

(51) Int. Cl.⁴: **B62D 1/18 , B60K 37/00**

(30) Priorität: **21.01.86 US 821387**

(43) Veröffentlichungstag der Anmeldung:
**29.07.87 Patentblatt 87/31**

(84) Benannte Vertragsstaaten:
**DE FR GB**

(71) Anmelder: **DEERE & COMPANY**
**1 John Deere Road**
**Moline Illinois 61265(US)**

(72) Erfinder: **Ruhter, Martin Lavern, Mr.**
**2065 Admiral**
**Dubuque Iowa 52001(US)**
Erfinder: **Loney, Allan Francis, Mr.**
**9275 Middle Road**
**Dubuque Iowa 52001(US)**

(74) Vertreter: **Feldmann, Bernhard**
**DEERE & COMPANY European Office, Patent**
**Department Steubenstrasse 36-42 Postfach**
**503**
**D-6800 Mannheim 1(DE)**

(54) **Steuersäule zur Aufnahme eines Lenkrades und mindestens eines Bedienungshebels.**

(57) Steuersäule zur Aufnahme eines Lenkrades (13) und mindestens eines Bedienungshebels (14), die auf einem Bedienungsstand (16) vertikal schwenkbar angeordnet ist und eine Entriegelungs-und eine Verriegelungsvorrichtung (22, 21) aufweist, wobei die Verriegelungsvorrichtung (21) auf dem Bedienungsstand (16) schwenkbar angeordnet ist und die Entriegelungsvorrichtung (22) einen Entriegelungsgriff (81) aufweist, der nach rückwärts bis in einen Bereich unterhalb des Lenkrades (13) aus der Steuersäule (10) geführt ist.

Fig. 1

EP 0 230 257 A2

## Steuersäule zur Aufnahme eines Lenkrades und mindestens eines Bedienungshebels

Die Erfindung bezieht sich auf eine Steuersäule zur Aufnahme eines Lenkrades und mindestens eines Bedienungshebels, die auf einem Bedienungsstand vertikal schwenkbar angeordnet ist und eine Entriegelungs-und eine Verriegelungsvorrichtung aufweist.

Diese bekannte Steuersäule (US-E-31646) ist auf einem Baufahrzeug angeordnet, wobei eine vordere und eine rückwärtige Strebe vorgesehen ist, die in einem auf dem Bedienungsstand vorgesehenen Podest schwenkbar gelagert sind, während die oberen Enden der Streben über eine Längsstrebe miteinander verbunden sind, die die Lenkeinrichtung aufnimmt. Diese Steuersäule kann um ihre unteren Anlenkpunkte auf dem Bedienungsstand vertikal verschwenkt werden, so daß die Bedienungsperson im Sitzen oder im Stehen das Fahrzeug bedienen kann. Damit die Steuersäule in ihren verschiedenen Positionen arretierbar ist, ist eine Feststellvorrichtung vorgesehen, die über eine Entriegelungsvorrichtung in Form eines Bügels entriegelbar ist. Hierbei erstreckt sich der Bügel mit Bezug auf die Fahrtrichtung vor dem Lenkrad über die Steuereinrichtung, so daß zum Entriegeln die Bedienungsperson über das Lenkrad greifen muß, um den Bügel erfassen zu können. Danach ist der Bügel entsprechend zu verschwenken und in dieser Stellung zu halten, damit die Steuersäule verstellt werden kann. Zum Verriegeln muß dann der Bügel wieder in seine Ausgangsposition zurück verstellt werden, so daß das Entriegeln und Verstellen der Steuersäule äußerst schwierig durchzuführen ist. Hinzu kommt, daß die Verriegelungsvorrichtung einenends an der rückwärtigen Strebe angelenkt ist und entsprechende Aussparungen aufweist, die in einem an der vorderen Strebe vorgesehenen Zapfen oder in eine Querstrebe eingreifen können. Des weiteren ist in der Verriegelungsvorrichtung noch ein Langloch vorgesehen, in dem ein zur Entriegelungsvorrichtung gehörender Hebel längsverschiebbar ist, der sich zusätzlich auf dem Zapfen abstützt. Zum Entriegeln verschwenkt der Hebel auf dem Zapfen und die Entriegelung erfolgt durch Muskelkraft, so daß zusätzlich zum Verstellen der Steuersäule auch zum Entriegeln erhebliche Kräfte aufzuwenden sind. Ferner ist bei dieser Vorrichtung noch von Nachteil, daß sich die Verriegelungsvorrichtung nur von der vorderen zur rückwärtigen Strebe erstreckt, und nach vorne austritt, wodurch hier ein entsprechender Freiraum vorgesehen werden muß, so daß der gesamte Platzbedarf für die mit der Verriegelungs-und Entriegelungsvorrichtung vorgesehene Steuersäule relativ groß ist.

Die mit der Erfindung zu lösende Aufgabe wird darin gesehen, die Steuersäule vorteilhafter auszubilden, wobei insbesondere der Platzbedarf für die Verriegelungs-und Entriegelungsvorrichtung gering ist. Diese Aufgabe ist nach der Erfindung dadurch gelöst worden, daß die Verriegelungsvorrichtung auf dem Bedienungsstand schwenkbar angeordnet ist, wodurch die Voraussetzungen für eine einfache Verriegelung bzw. Entriegelung geschaffen sind, und beim Verschwenken der Steuersäule das Gewicht der Verriegelungsvorrichtung nicht mitverschwenkt werden muß.

Nach der Erfindung wird ferner vorgeschlagen, daß die Entriegelungsvorrichtung einen Entriegelungsgriff aufweist, der nach rückwärts bis in einen Bereich unterhalb des Lenkrades aus der Steuersäule geführt ist, wodurch einen leichte Erreichbarkeit des Entriegelungsgriffes für die Bedienungsperson gegeben ist und sie die Möglichkeit hat, beim Erfassen des Entriegelungsgriffes die Verriegelungsvorrichtung zu lösen und gleichzeitig die Steuersäule zu verschwenken.

Damit die Verriegelungsvorrichtung nicht unnötig viel Platz einnimmt, ist ferner nach der Erfindung vorgesehen, daß die Steuersäule eine rückwärtige und vordere Verkleidung aufweist, und daß die Verriegelungsvorrichtung vollständig zwischen der rückwärtigen und vorderen Verkleidung angeordnet ist.

Erfindungsgemäß kann die Verriegelungsvorrichtung eine auf dem Bedienungsstand schwenkbar gelagerte Verriegelungsstange aufweisen, die in mehreren Schwenkstellungen mit einem an der rückwärtigen Verkleidung der Steuersäule vorgesehenen Zapfen verriegelbar ist und zudem noch auf einer die vordere Verkleidung lagernden Gelenkachse schwenkbar angeordnet werden kann, wobei an dem der Gelenkachse abgelegenen Ende der Verriegelungsstange Aussparungen zur Aufnahme des Zapfens vorgesehen sind. Auf diese Weise kann die Verriegelungsstange in äußerst einfacher Weise auf der sowieso vorhandenen Gelenkachse montiert werden und erstreckt sich damit von der Gelenkachse schräg nach oben und rückwärts, so daß sie bereits aufgrund ihres Eigengewichtes eingreifen kann.

Damit eine betriebssichere Verriegelung gewährleistet ist, kann nach der Erfindung außerdem vorgesehen sein, daß die Aussparungen V-oder U-förmig ausgebildet sind und den Zapfen in einem festen Pressitz aufnehmen, wobei an dem Zapfen mindestens eine anderenends an der Verriegelungsstange angeschlossene Feder angreift, die damit bestrebt ist, den Zapfen in den Aussparungen zu halten. Sollte die Feder ermüden, so ist dennoch eine relativ betriebssichere Verriegelung gegeben, da auch ein Eingriff bereits durch die - schräge Lage und somit aufgrund des Eigengewichtes der Verriegelungsstange stattfinden kann. Damit zum Entriegeln der Verriegelungsstange eine relativ geringe Muskelkraft erforderlich ist, greift erfindungsgemäß an der Verriegelungsstange der eine Schenkel eines Winkelhebels der Entriegelungsvorrichtung an, wobei der Winkelhebel an der rückwärtigen Verkleidung schwenkbar angeordnet ist und bei Betätigung des Entriegelungsgriffes verschwenkt. Hiermit konmmen verschiedene Hebelarme zur Wirkung, die in einfacher Weise die Verriegelungsstange aus ihrem Eingriff mit dem Zapfen entgegen der Wirkung der Feder ziehen. Im einzelnen kann der eine Schenkel des Winkelhebels einen Zapfen aufweisen, der in einem Langloch der Verriegelungsstange geführt ist, während der andere Schenkel an einer Entriegelungsstange angelenkt ist, die schwenkbar an dem an der rückwärtigen Verkleidung angelenkten Entriegelungsgriff angeschlossen ist. Hierbei begrenzt das Langloch den Schwenkbereich der Steuersäule, dadurch, daß der Zapfen gegen die jeweiligen Ende zur Anlage kommen kann. Gleichzeitig gewährleistet diese Anordnung, daß beim Loslassen des Entriegelungsgriffes schon alleine aufgrund des Eigengewichtes der einzelnen Teile wieder eine Verriegelung eintritt, die aber noch dadurch unterstützt werden kann, daß die Entriegelungsvorrichtung entgegen Federwirkung betätigbar ist, wozu nach der Erfindung zweckmäßig vorgesehen sein kann, daß an dem der Anlenkstelle der Entriegelungsstange an den Entriegelungsgriff abgelegenen Ende der Entriegelungsstange mindestens eine Feder angreift, die anderenends an die rückwärtige Verkleidung angeschlossen ist. Damit ist die gesamte Entriegelungs-und Verriegelungsvorrichtung bis auf die Anlenkstelle der Verriegelungsstange an der sowieso vorhandenen Gelenkachse nur mit der rückwärtigen Verkleidung verbunden, wodurch sich ein relativ einfacher Aufbau und eine äußerst leichte Montage ergibt.

In der Zeichnung ist ein nachfolgend näher erläutertes Ausführungsbeispiel der Erfindung dargestellt. Es zeigt:

Fig. 1 die Steuersäule in perspektivischer Darstellung und teilweise im Schnitt

Fig. 2 die Steuersäule in Seitenansicht in ihrer weitesten nach vorne vertellten Stellung,

Fig. 3 eine ähnliche Darstellung wie Fig. 2, jedoch die Steuersäule in ihrer am weitesten nach rückwärts verschwenkten Stellung zeigend,

Fig. 4 einen Ausschnitt aus der Verriegelungsund Entriegelungsvorrichtung im größeren Maßstab,

Fig. 5 eine Ansicht in Blickrichtung 5-5 in Fig. 4,

Fig. 6 die Einzelteile der Entriegelungs-und Verriegelungsvorrichtung in auseinandergezogener Darstellung.

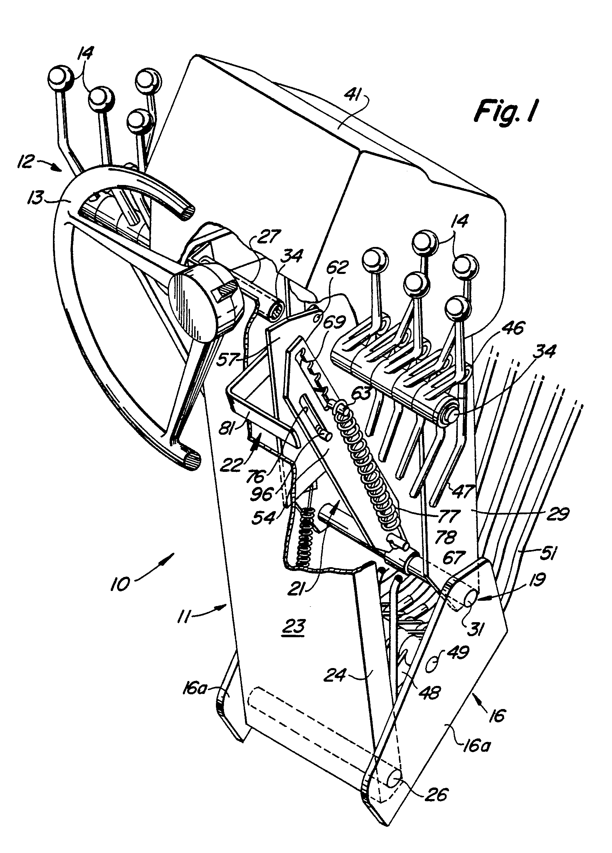

In den Fig. 1 bis 3 ist die verschwenkbare Steuersäule 10 dargestellt, die im wesentlichen aus einem Ständer 11 besteht, der zur Aufnahme einer Steuereinheit 12 mit einem Lenkrad 13 und einem oder mehreren Bedienungshebeln 14 dient.

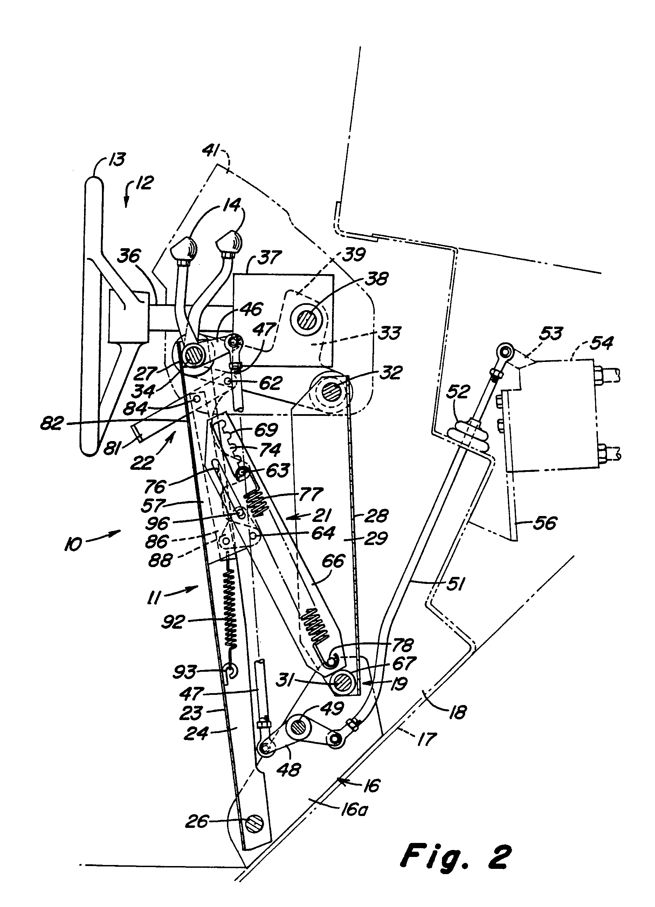

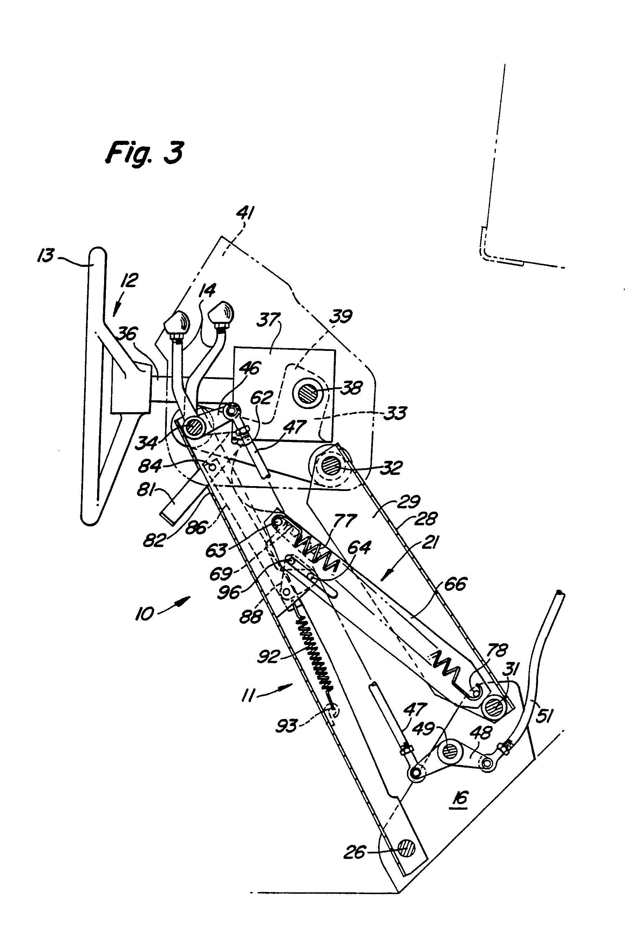

Die Steuersäule 10 ist auf einem Bedienungsstand 16 schwenkbar angeordnet, wozu dieser zwei mit Querabstand zueinander angeordnete Platten 16a aufweist, die ihrerseits den Ständer 11 - schwenkbar in einer hochstehenden Position aufnehmen, wobei der Bedienungsstand 16 an seinem vorderen Ende nach oben abgebogen ist und dort in eine Vorderplatte 17 übergeht, auf der die Platten 16a angeordnet sind. Der Bedienungsstand 16 kann von einer Kabine 18 umgeben sein und eine vordere Querachse ist mit 19 bezeichnet. Die Steuersäule 10 ist ferner mit einer Verriegelungsvorrichtung 21 versehen, die schwenkbar auf dem Bedienungstand 16 angeordnet ist und zum Verriegeln des Ständers 11 gegen eine Schwenkbewegung dient. Fig. 2 zeigt die Steuersäule in ihrer Stellung, in der sie am weitesten nach vorne von der Bedienungsperson fortgeschwenkt ist, wobei die Bedienungsperson sowohl im sitzenden als auch im stehenden Zustand das Lenkrad oder die Bedienungshebel betätigen kann. Fig. 3 zeigt die Steuersäule in ihrer am weitesten nach rückwärts verschwenkten Position, in der sie sich am nächsten zu einer auf einem Sitz befindlichen Bedienungsperson befindet. Ferner ist noch eine Entriegelungsvorrichtung 22 vorgesehen, über die die Verriegelungsvorrichtung entriegelbar ist, wobei dann die Konsole im entriegelten Zustand von der Bedienungsperson in eine beliebige Stellung zwischen den Endstellungen nach Fig. 2 und 3 verstellt werden kann. Im einzelnen besteht der Ständer aus einer U-förmig ausgebildeten rückwärtigen Verkleidung 23, die nach vorne gerichtete Schenkel 24 aufweist, wobei die Verkleidung an ihrem unteren Ende schwenkbar auf einer Querachse 26 angeordnet ist, die ihrerseits wiederum sich zwischen den Platten 16a erstreckt. An ihrem oberen Ende nimmt die rückwärtige Verkleidung eine Querhülse 27 zwischen den Schenkeln auf, deren Funktion nachfolgend ̃noch erläutert wird. Eine ebenfalls U-förmig ausgebildete vordere Verkleidung 28 bildet die Frontseite der Steuersäule 10 und weist ebenfalls zwei sich nach rückwärts erstreckende Schenkel 29 auf. Auch bei der vorderen Verkleidung 28 ist das untere Ende auf einer Gelenkachse 31 gelagert, die ihrerseits wiederum in den Platten 16a eingesetzt werden kann. Es versteht sich von selbst, daß die Gelenkachsen auch mit den Verkleidungen fest verbunden sein können und dann entsprechend in den Platten 16a gelagert sind. Andererseits ist es auch möglich, daß die Schenkel der vorderen Verkleidung an ihrem unteren Ende über eine Querhülse in Verbindung stehen, durch die die Querachse 19 geführt ist. An dem oberen Ende der vorderen Verkleidung 28 ist eine Gelenkachse 32 vorgesehen, die außerdem die vorderen Enden von zwei mit Querabstand zueinander angeordneten T-förmig ausgebildeten Verbindungsplatten 33 aufnehmen kann, wobei die rückwärtigen Enden dieser Verbindungsplatten 33 an einer Gelenkachse 34 angelenkt sind, die sich durch die Querhülse 27 erstreckt. Durch diese Anordnung ergibt sich ein trapezförmiges Ge stänge, das es ermöglicht, daß der Ständer 11 bzw. die Steuersäule 10 zwischen den in Fig. 2 und 3 gezeigten Endstellungen verschwenkbar ist, wobei die Anlenkpunkte und die Abmessungen der vorderen und rückwärtigen Verkleidung so gewählt sind, daß beim Verschwenken das Steuerrad 13 parallel verstellt wird, d.h. nicht kippt.

Zu der Steuereinheit 12 gehört noch eine Steuerradsäule 36, die in eine hydraulische Steuereinheit 37 eingesetzt ist, die wiederum auf einer Welle 38 lagert, wobei die Welle 38 die hochstehenden Stegteile 39 der Verbindungsplatten 33 miteinander verbindet. Hierdurch ist es möglich, daß die Steuereinheit unabhängig von der jeweilig gewählten Schwenkstellung der Steuersäule 10 nochmals verstellt werden kann. Eine Feststellvorrichtung zum Feststellen der Steuereinheit in den jeweils gewählten Positionen ist vorgesehen, aber in der Zeichnung der Einfachheit halber nicht dargestellt. Ferner ist aus den Fig. 1 und 2 noch eine Haube 41 ersichtlich, die die Steuereinheit abdeckt und in der alle Instrumente und weitere Teile zum Anzeigen der Fahrzeugfunktionen direkt vor dem Lenkrad 13 angeordnet sein können.

Was die Bedienungshebel 14 anbelangt, so sind sie alle auf der Gelenkachse 34 angeordnet und können auf dieser verschwenkt werden, wobei jeder Bedienungshebel 14 einen Arm 46 aufweist, der wiederum mit hochstehenden Steuerstangen 47 gelenkig verbunden ist, deren untere Enden an je einem Winkelhebel 48 angreifen. Letztere wiederum sind auf einer Querwelle 49 verschwenkbar angeordnet, die sich zwischen den Platten 16a erstreckt. Der freie Schenkel eines jeden Winkelhebels 48 ist an das untere Ende von Hebeln 51 angeschlossen, die sich nach oben und nach vorne durch eine Dichtung 52 und eine nicht dargestellte Öffnung in der Vorderplatte 17 der Kabine erstrecken und an den äußeren Enden von Steuerarmen 53 angreifen, die wiederum zu Steuerventilen 54 gehören. Die einzelnen Steuerventile 54 sind mit einer Platte 56, die an der Vorderseite der Kabine vorgesehen ist, verschraubt und dienen dazu, bei Betätigung der Steuerarme 53 nicht dargestellte Verbraucher mit Druckflüssigkeit zu versorgen.

Um die Steuersäule in ihren verschiedenen Positionen verriegeln zu können, ist die rückwärtige Verkleidung an ihrer nach vorne zeigenden Stirnseite 59 noch mit einer Verriegelungsplatte 57 versehen, deren rückwärtige Kante 58 in zweckmäßiger Weise mit der Stirnseite 59 bzw. der rückwärtigen Verkleidung zu verbinden ist. Die gegenüberliegende oder Vorderseite 61 der Verriegelungsplatte 57 weist drei mit Vertikalabstand zueinander angeordnete vorstehende Teile auf, wobei der oberste einen Gewindeteil 62 aufnimmt, der sich von einer Seite der Verriegelungsplatte nach außen erstreckt, während der mittlere Vorsprung einen Zapfen 63 fest aufnimmt, der sich zu beiden Seiten der Verriegelungsplatte erstreckt, und wobei schließlich der untere Vorsprung noch einen zweiten Gewindeteil 64 fest aufnimmt, der ähnlich angeordnet ist, wie der Gewindeteil 62. Auf die Funktionen der Gewindeteile und des Zapfens wird nachfolgend noch näher eingegangen.

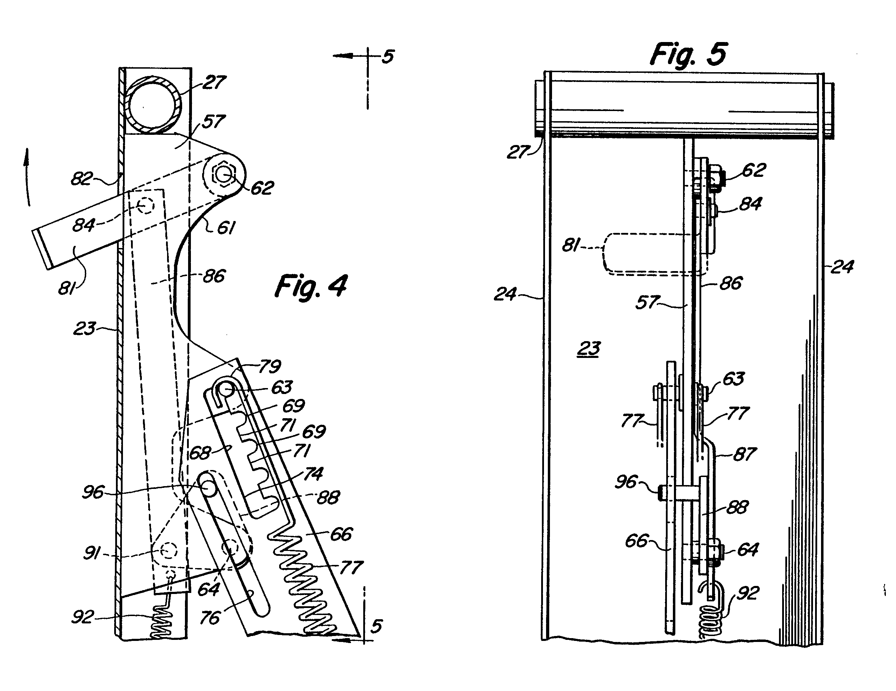

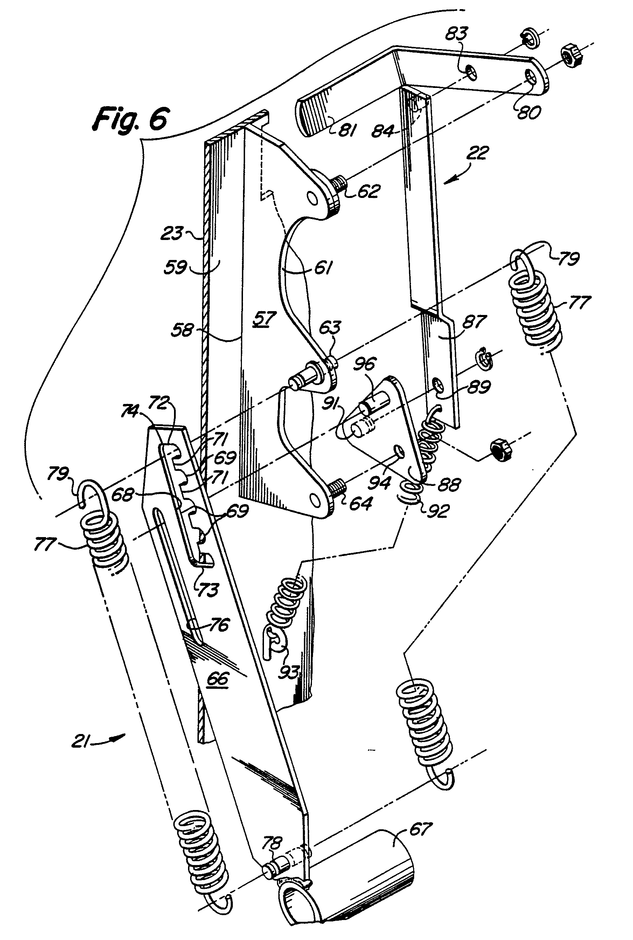

Die Verriegelungsvorrichtung 21 ist mit einer Verriegelungsstange 66 versehen, deren unteres Ende mit einer Hülse verbunden, beispielsweise verschweißt ist, wobei diese Hülse drehbar auf der Querachse 31 angeordnet ist, während das obere Ende einen sich in Längsrichtung der Verriegelungsstange 66 erstreckenden Nutenausschnitt 74 aufweist. Dabei ist eine Seite, und zwar die rückwärtige Seite 68 geradlinig geführt und erstreckt sich im wesentlichen parallel zu der Längsmittelebene der Verriegelungsstange, wobei in die andere Seite ein Anzahl von Aussparungen 69 eingearbeitet ist, die durch Stege 71 voneinander getrennt sind, wie es klar aus Fig. 6 oder auch aus Fig. 4 hervorgeht. Das obere Ende des Nutenausschnittes 74 ist durch eine Oberkante 72 verschlossen, während das untere Ende des Nutenausschnittes 74 durch eine Unterkante 73 gebildet wird. Ein Langloch 76 ist ferner noch in der Verriegelungstange 66 vorgesehen und verläuft im wesentlichen parallel zu der Seite 68 des Nutenausschnittes 74.

Die Verriegelungsvorrichtung 21 ist ferner noch mit zwei Federn 77, die als Entlastungsfedern wirken, versehen, deren untere Enden an den äußeren Enden eines in die Verriegelungsstange 66 eingesetzten Stiftes 78 und deren obere Enden 79 an den beiden Enden des Stiftes 63 angreifen.

Die Entriegelungsvorrichtung 22 ist ferner noch mit einem Entriegelungsgriff 81 versehen, der nicht nur dazu dient, die Verriegelungsvorrichtung zu entriegeln, sondern gleichzeitig dazu benutzt werden kann, um die Steuersäule 10 zu verschwenken. Der Entriegelungsgriff 81 ist L-förmig ausgebildet und erstreckt sich von dem Inneren des Ständers 11 nach außen durch eine Öffnung 82 in der rückwärtigen Verkleidung 23 bis in einen Bereich unterhalb des Lenkrades 13, so daß er leicht von der einen Hand einer Bedienungsperson erfaßt werden kann. Das innere Ende des Entriegelungsgriffes 81 ist mit einer Bohrung versehen, so daß es schwenkbar von dem Gewindeteil 62, der mit der Verriegelungsplatte 57 verbunden ist, aufgenommen werden kann. Eine weitere Öffnung 83 ist in den Entriegelungsgriff 81 eingearbeitet, um einen Stift 84 aufnehmen zu können, der mit dem oberen Ende eines sich längs erstreckenden Entriegelungshebels 86 verbunden ist. Der Entriegelungshebel 86 ist derart angeordnet, daß er sich nach unten parallel zu der einen Seite der Verriegelungsplatte 57 erstreckt, wobei sein unteres Ende 87 nach außen abgewinkelt ist, um einen dreieckförmig ausgebildeten Winkelhebel 88 aufnehmen zu können. In das untere Ende 87 des Entriegelungshebels 86 ist noch eine Öffnung 89 eingearbeitet. Diese kann einen Stift 91 - schwenkbar aufnehmen, der mit der einen Ecke des Winkelhebels 88 fest verbunden ist. An dem unteren Ende des Entriegelungshebels 86 greift noch das obere Ende einer Feder 92 an, deren unteres Ende über einen Haken 93 mit der inneren Stirnseite 59 der rückwärtigen Verkleidung 23 verbunden ist. Durch die Anordnung der Feder 92 wird der Entriegelungshebel normalerweise derart vorgespannt, daß er den Entriegelungsgriff 81 entgegen dem Uhrzeigerdrehsinn um seine Anlenkstelle an dem Gewindeteil 62 verschwenken will. In eine weitere Ecke des Winkelhebels 88 ist noch eine Öffnung 94 eingearbeitet, über die der Winkelhebel 88 auf dem Gewindeteil 64, der ebenfalls in der Verbindungsplatte 57 vorgesehen ist, schwenkbar gelagert werden kann. Ein Zapfen 96 ist mit der dritten Ecke des Winkelhebels 88 verbunden und erstreckt sich im montierten Zustand durch das Langloch 76, das in der Verriegelungsstange 66 vorgesehen ist. Die Verbindung der einzelnen Schwenkteile miteinander bzw. an der Verbindungsplatte 57 erfolgt natürlich mit entsprechenden Unterlegscheiben und Schrauben bzw. Segerringen, auf die aber hier im einzelnen nicht Bezug genommen zu werden braucht.

In der Stellung der Steuersäule 10 nach Fig. 2 befindet sich die Steuersäule in ihrer am weitesten nach vorne verschwenkten Stellung, in der sich der Zapfen 96 des Winkelhebels 88 an dem unteren Ende des Langloches 76 befindet und damit eine weitere Verschwenkung nach vorne blockiert. In der Stellung nach Fig. 2 befindet sich der Zapfen 63, der an der Verbindungsplatte 57 fest angeordnet ist, ebenfalls an dem unteren Ende des Nutenausschnittes 74. Über die Feder 92 und auch das Gewicht der Verriegelungsstange 66 wird die Verriegelungsstange 66 nach rückwärts derart gezogen, daß sie mit einer ihrer Aussparungen den Zapfen 63 übergreift. Der Entriegelungsgriff 81 wird dabei normalerweise seine untere Position infolge der Wirkung der Feder 92 einnehmen, so daß die gesamte Steuersäule 10 verriegelt ist.

Um die Steuersäule 10 in eine andere Position zu verstellen, beispielsweise in die der Fig. 3, in der die Steuersäule 10 ihre am weitesten nach rückwärts geschwenkte Stellung ein nimmt, muß das folgende erfolgen. Die Bedienungsperson ergreift den Entriegelungsgriff 81 und hebt diesen an, wodurch er im Uhrzeigerdrehsinn um den Gewindeteil 62 verschwenkt. Dabei wird der Entriegelungshebel 86 gegen die Wirkung der Feder 92 angehoben. Diese Hubbewegung wiederum wirkt sich darin aus, daß der Stift 91 an dem Winkelhebel 88 angehoben wird, wodurch der Winkelhebel 88 im Uhrzeigerdrehsinn um den stationären Gewindeteil 64, der mit der Entriegelungsplatte 57 fest verbunden ist, verschwenkt.

Wenn nun der Winkelhebel 88 im Uhrzeigerdrehsinn mit Bezug auf Fig. 2 verschwenkt, dann bewirkt die Bewegung des Zapfens 96, daß die Verriegelungsstange ebenfalls im Uhrzeigerdrehsinn um ihre Anlenkstelle an der Gelenkachse 31 verschwenkt. Dies ist mit Bezug auf den Zapfen 63 eine Relativbewegung, wodurch der Zapfen 63 frei gegeben wird und entlang der geraden Seite 68 des Nutenausschnittes 74 in eine Position nach oben gleiten kann, wobei die Aufwärtsbewegung davon abhängt, wie groß der Schwenkweg entgegen dem Uhrzeigerdrehsinn der Steuersäule 10 ist. Bei diesem Vorgang gleitet ebenfalls der Zapfen 96 nach oben in dem Langloch 26, und zwar um eine Distanz, die der des Zapfens 63 entspricht. Sobald die Bedienungsperson die neue gewünschte Schwenkstellung erreicht hat, läßt sie den Entriegelungsgriff los, wodurch dieser sich entgegen dem Uhrzeigerdrehsinn bewegt und den Stift 91 an dem Winkelhebel 88 nach unten dreht, was in einer gleichzeitigen Drehbewegung entgegen dem Uhrzeigerdrehsinn des Winkelhebels 88 um den stationären Gewindeteil 64 resultiert. Durch diese Bewegung wird auch der Zapfen 96 entgegen dem Uhrzeigerdrehsinn verschwenken, wodurch wiederum die Verriegelungsstange 66 entgegen dem Uhrzeigerdrehsinn schwenkt und eine der Aussparungen 69 den Zapfen 63 erfassen kann. Schon alleine wegen des Eigengewichtes der Verriegelungsstange wird der Eingriff zwischen der Aussparung und dem Zapfen erhalten bleiben, was aber noch durch die Wirkung der Feder 92 unterstützt wird, so daß eine betriebssichere Verriegelung gegeben ist.

Die Aussparungen 69 sind vorzugsweise derart ausgebildet, daß sie sich verjüngen oder daß sie V-förmig ausgebildet sind, so daß der Zapfen 63 zwar leicht in die Aussparungen treten kann, aber dann von den Schenkeln erfaßt bzw. in den Aussparungen festgeklemmt wird. Hierdurch entsteht ein Pressitz, was noch durch die Wirkung der Feder erhöht wird, so daß eine relativ feste Verbindung zwischen dem Zapfen 63 und der entsprechenden Aussparung erreicht wird. Hierdurch ist mit großer Wahrscheinlichkeit ausgeschlossen, daß sich die Verriegelung von selbst einmal lösen könnte.

Durch die besondere Ausbildung der vorderen und rückwärtigen Verkleidung wird ein im wesentlichen geschlossenes Gehäuse erzielt, daß in sich die gesamte Verriegelungsvorrichtung aufnehmen kann, wobei lediglich der Entriegelungsgriff 81 nach außen geführt ist. Hinzu kommt, daß die Verriegelungsund Entriegelungsvorrichtung im wesentlichen nur an Teilen der rückwärtigen Verkleidung 23 angreifen, wenn man davon absieht, daß die Verriegelungsstange 66 noch auf der Gelenkachse 31 gelagert ist. Durch die Lagerung der Verriegelungsstange 66 auf dem Bedienungsstand 16 werden die Voraussetzungen für die vorgenannten Wirkungen geschaffen, wobei in vorteilhafter Weise eine bereits vorhandene Gelenkachse zur Lagerung der Verriegelungsstange herangezogen wird.

**Ansprüche**

1. Steuersäule zur Aufnahme eines Lenkrades (13) und mindestens eines Bedienungshebels (14), die auf einem Bedienungsstand (16) vertikal schwenkbar angeordnet ist und eine Entriegelungs- und eine Verriegelungsvorrichtung (22, 21) aufweist, dadurch gekennzeichnet, daß die Verriegelungsvorrichtung (21) auf dem Bedienungsstand (16) schwenkbar angeordnet ist.

2. Steuersäule nach Anspruch 1, dadurch gekennzeichnet, daß die Entriegelungsvorrichtung (22) einen Entriegelungsgriff (81) aufweist, der nach rückwärts bis in einen Bereich unterhalb des Lenkrades (13) aus der Steuersäule (10) geführt ist.

3. Steuersäule nach Anspruch 1 oder 2, dadurch gekennzeichnet, daß die Steuersäule (10) eine rückwärtige und vordere Verkleidung (23, 28) aufweist und daß die Verriegelungsvorrichtung (21) vollständig zwischen der rückwärtigen und der vorderen Verkleidung (23, 28) angeordnet ist.

4. Steuersäule nach einem oder mehreren der vorherigen Ansprüche, dadurch gekennzeichnet, daß die Verriegelungsvorrichtung (21) eine auf dem Bedienungsstand (16) schwenkbar gelagerte Verriegelungsstange (66) aufweist, die in mehreren Schwenkstellungen mit einem an der rückwärtigen Verkleidung (23) der Steuersäule (10) vorgesehenen Zapfen (63) verriegelbar ist.

5. Steuersäule nach Anspruch 4, dadurch gekennzeichnet, daß die Verriegelungsstange (66) auf einer die vordere Verkleidung (28) lagernden Gelenkachse (31) schwenkbar angeordnet ist und an ihrem der Gelenkachse (31) abgelegenen Ende mit Aussparungen (69) zur Aufnahme des Zapfens (63) versehen ist.

6. Steuersäule nach Anspruch 5, dadurch gekennzeichnet, daß die Aussparungen (69) V-oder U-förmig ausgebildet sind und den Zapfen (63) in einen Pressitz aufnehmen, wobei an dem Zapfen (63) mindestens eine anderenends an der Verriegelungsstange (66) angeschlossene Feder (77) angreift.

7. Steuersäule nach einem oder mehreren der vorherigen Ansprüche, dadurch gekennzeichnet, daß an der Verriegelungsstange (66) der eine Schenkel eines Winkelhebels (88) der Entriegelungsvorrichtung (22) angreift, wobei der Winkelhebel an der rückwärtigen Verkleidung (23) schwenkbar angeordnet ist und bei Betätigung des Entriegelungsgriffs (81) verschwenkt.

8. Steuersäule nach Anspruch 7, dadurch gekennzeichnet, daß der eine Schenkel des Winkelhebels (88) einen Zapfen (96) aufweist, der in einem Langloch (76) der Verriegelungsstange (66) geführt ist, während der andere Schenkel an einer Entriegelungsstange (86) angelenkt ist, die schwenkbar an dem an der rückwärtigen Verkleidung (23) angelenkten Entriegelungsgriff (81) angeschlossen ist.

9. Steuersäule nach einem oder mehreren der vorherigen Ansprüche, dadurch gekennzeichnet, daß die Entriegelungsvorrichtung (22) entgegen Federwirkung betätigbar ist.

10. Steuersäule nach Anspruch 9, dadurch gekennzeichnet, daß an dem der Anlenkstelle der Entriegelungsstange (86) an den Entriegelungsgriff (81) abgelegenen Ende der Entriegelungsstange (86) mindestens eine Feder (92) angreift, die anderenends an die rückwärtige Verkleidung (23) angeschlossen ist.

Fig. 1

**Fig. 2**

# Fig. 3

Fig. 5

Fig. 4

**Fig. 6**